# EUROPEAN PATENT APPLICATION

(11) **EP 4 019 712 A1**
(43) Date of publication of application: **29.06.2022**
(21) Application number: 21216587.2
(22) Date of filing: 21.12.2021
(51) Int. Cl.: E04H 4/16

(54) **POOL CLEANING ROBOT WITH VISUAL DISPLAY**

(30) Priority: 28.12.2020 US 202017134960
(71) Applicant: Aquatron Robotic Technology Ltd., 1811002 Afula (IL)
(72) Inventor: BAREL, Eyal, 3904111 Tirat Carmel (IL); ADLIVANKIN, Evgeny, 3298214 Haifa (IL); GARTI, Efraim, 3094088 Zichron Yaakov (IL)
(74) Representative: Pearl Cohen Zedek Latzer Baratz UK LLP

(57) **Abstract**

There is provided a pool-cleaning robot (3) comprising: a housing; a propulsion mechanism (4) configured to propel the robot along the internal surfaces of a pool; and a visual display (9) for displaying information associated with operation of the pool-cleaning robot. The information may be in the form of moving images.

## Description

### FIELD OF THE INVENTION

The present invention relates to pool-cleaning robots. More particularly, the present invention relates to a pool-cleaning robot with a visual display.

### BACKGROUND OF THE INVENTION

Swimming pools and similar water reservoirs require frequent cleaning. Manual cleaning of the pools involves tedious and intensive labor, making autonomous robots for cleaning pools an attractive alternative. The use of pool-cleaning robots for gathering dirt, debris and the like, together with other features such as scrubbing pool surfaces and disposing of moss, makes the pool-cleaning robots a tool sought after by pool owners and caretakers alike.

Pool-cleaning robots, e.g., autonomous pool-cleaning robots, are typically designed to scan and map the pool's floor and walls, creating an optimized path, generally using a form of artificial intelligence algorithm, for traversing the pool's area. After the path is calculated these robots sweep and brush the floor and side wall surfaces of the pool, catching debris and dirt found on the pool's floor and walls or floating in the pool's water, by pumping the surrounding water and dirt into a debris trap located inside the by the robot, using the robot's pump. The derbies and water sucked by the robot generally go through a water filtering chamber.

While the operation of a pool-cleaning robot may be fully automatic, owners of pool-cleaning robots may be interested to observe their robot, observe it working and even remotely operate the robot (e.g., change its direction of motion, change the sweeping pattern it follows, or having the robot end the cleaning task and return to them for removal from the pool and putting it away).

It may be desired to have a pool-cleaning robot with a visual display that is configured to provide visual indications relating to the operation of the robot, so as to allow the user of such robot located outside (or inside) the pool to determine the current action or actions that the robot is performing or is about to perform.

### SUMMARY OF THE INVENTION

There is thus provided, in accordance with an embodiment of the invention, a pool-cleaning robot comprising: a housing; a propulsion mechanism configured to propel the robot along the internal surfaces of a pool; and a visual display for displaying information associated with operation of the pool-cleaning robot.

In some embodiments of the invention, the visual display includes one or a plurality of display surfaces.

In some embodiments of the invention, the visual display is placed on an external surface of the housing.

In some embodiments of the invention, the visual display is located on a top surface of the housing.

In some embodiments of the invention, the visual display is located on a side surface of the housing.

In some embodiments of the invention, the visual display includes one or a plurality of display surfaces.

In some embodiments of the invention, one or a plurality of display surfaces are selected from the group of display surfaces consisting of: electroluminescent (ELD) display, liquid crystal display (LCD), light-emitting diode (LED) back-lit LCD, thin-film transistor (TFT) LCD, LED display, organic light emitting diode (OLED) display, active-matrix organic light-emitting diode (AMOLED) display, plasma display, and quantum dot light-emitting diode (QLED) display.

In some embodiments of the invention, the robot further includes a controller for controlling the visual display.

In some embodiments of the invention, the robot is configured to be controlled by a remote-control unit for remotely controlling the pool-cleaning robot.

In some embodiments of the invention, the robot is configured to be controlled by an application of a smartphone for remotely controlling the pool-cleaning robot.

In some embodiments of the invention, the information associated with operation of the pool-cleaning robot is selected from the group of indications consisting of: statuses of the robot, operation mode of the robot, start-up indication, indication of travel direction of the robot, indication that a filter of the robot needs cleaning, warning indication and shutting down indication.

In some embodiments of the invention, the visual display comprises one or a plurality of sets of strips.

In some embodiments of the invention, the robot is configured to display the information on some of said one or a plurality of the sets of strips.

In some embodiments of the invention, the information is selected from the group consisting of images, moving images, videos and animations.

### BRIEF DESCRIPTION OF THE DRAWINGS

In order for the present invention to be better understood and for its practical applications to be appreciated, the following Figures are provided and referenced hereafter. It should be noted that the Figures are given as examples only and in no way limit the scope of the invention. Like components are denoted by like reference numerals.
Fig. 1A schematically illustrates a pool-cleaning robot with a visual display, in accordance with some embodiments of the present invention.
Fig. 1B is a cross-sectional view of the pool-cleaning robot of Fig. 1A.
Fig. 2 schematically illustrates another pool-cleaning robot with a visual display, in accordance with some embodiments of the present invention.
Fig. 3 schematically illustrates another pool-cleaning robot with a visual display, in accordance with some embodiments of the present invention.
Fig. 4A illustrates several examples of indications for display on a visual display of a pool-cleaning robot, according to some embodiments of the present invention.
Fig. 4B illustrates additional examples of indications for display on a visual display of a pool-cleaning robot, according to some embodiments of the present invention.

### DETAILED DESCRIPTION OF THE INVENTION

In the following detailed description, numerous specific details are set forth in order to provide a thorough understanding of the invention. However, it will be understood by those of ordinary skill in the art that the invention may be practiced without these specific details. In other instances, well-known methods, procedures, components, modules, units and/or circuits have not been described in detail so as not to obscure the invention.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium (e.g., a memory) that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. Unless explicitly stated, the method embodiments described herein are not constrained to a particular order or sequence. Additionally, some of the described method embodiments or elements thereof can occur or be performed simultaneously, at the same point in time, or concurrently. Unless otherwise indicated, the conjunction "or" as used herein is to be understood as inclusive (any or all of the stated options).

In accordance with some embodiments of the invention, a pool-cleaning robot may include a controller and/or a processor for executing program instructions and/or remote control instructions, which when executed by the processor or controller, carry out methods disclosed herein.

In accordance with some embodiments of the invention, a pool-cleaning robot may be configured to operate autonomously to clean a pool. A propulsion system of the pool-cleaning robot may be configured to propel the pool-cleaning robot across an internal surface of a pool, e.g., a floor of the pool or a side wall, in accordance with predetermined or programmed instructions.

In accordance with some embodiments of the invention, a pool-cleaning robot may be configured to clean a water filled pool or another type of liquid filled container (e.g. fish tank, artificial pond or other containers filled with water or other liquid). Therefore, any reference herein to a pool water or to similar or related terms should be understood as including any suitable type of liquid container (e.g., that is large enough to enable or benefit from cleaning by a pool-cleaning robot).

In accordance with some embodiments of the invention, a pool-cleaning robot may include a propulsion mechanism for propelling the robot over the traveled surface and a pumping system for pumping water and debris in the vicinity of the robot (e.g., underneath the bottom of the robot or close by) and for ensuring good contact with the pool surface, e.g., side walls or other vertically oriented surfaces The robot may be configured to have a plurality of sensors, some of which may sense tilt or orientation, such as a gyro sensor. The sensor may indicate if the robot is approaching or is on a tilt, an inclination or a vertically oriented surface. For example, the robot may use this tilt information to increase the propulsion power, which will in turn increase the force applied on the robot towards the pool surfaces, further facilitating the grip for climbing and descent of pool walls.

In accordance with some embodiments of the invention, a pool-cleaning robot may be configured to operate autonomously or partially autonomously. For example, the robot may have autonomous capabilities for mapping a floor, walls and edges of the pool. The robot may autonomously clean the pool, its edges and its substantial surrounding area. For example, the robot may generate a predetermined plan or path for traversing areas designated for cleaning. The robot may also autonomously generate amendments to a predetermined route based on real time events, for example, if the robot met an obstacle, it may reroute around it, or if a robot operator sent an instruction to the robot mid-operation, such as turning or backing away, the robot may fulfil the instruction and recalculate the route accordingly, commencing the cleaning of the pool following the newly amended route. The robot may also automate a repetitive or scheduled cleaning routine, for example the robot may be programmed to initiate a cleaning routine daily or weekly according to the user or default settings.

In accordance with some embodiments of the invention, a pool-cleaning robot may be configured to allow an operator to remotely control at least some aspects of operation of the pool-cleaning robot. In some embodiments, the pool-cleaning robot may be configured to enable at least limited remote control of propulsion of the pool-cleaning robot, e.g., during operation of the pool-cleaning robot. For example, the operator may input a command (e.g., using a designated remote control device, or using a smartphone application) to cause a change in a direction of motion of the pool-cleaning robot along a pool surface. The operator may remotely control the operation of the pool-cleaning robot when standing outside of the pool. Thus, the operator may override autonomous operation of the pool-cleaning robot, e.g., when autonomous operation does not, or cannot, address a particular situation.

In accordance with some embodiments of the invention, a pool-cleaning robot may be configured to have a visual display for displaying one or more visual indicators (e.g. mono/multi-color lights, light strips or displays) for displaying information or entertaining content. The pool-cleaning robot may be configured to display the information on all of the display strips or only on some of the strips.

A visual display, according to some embodiments of the present invention, may include one or a plurality of display surfaces, e.g., screens. Such display surfaces may include, for example, one or more display types, for example, electroluminescent (ELD) display, liquid crystal display (LCD) (for example, light-emitting diode (LED) back-lit LCD, thin-film transistor (TFT) LCD), LED display (e.g., organic light emitting diode (OLED) display, active-matrix organic light-emitting diode (AMOLED) display, plasma display, quantum dot light-emitting diode (QLED) display.

According to some embodiments of the present invention, a pool-cleaning robot may be configured to provide an indicia of various operation modes, data and status of the pool-cleaning robot or its surroundings using the visual display. For example, the visual display may display data regarding a current status or operation of the robot, or a status or operation that is about to commence, such as but not limited to direction of travel, cleaning time elapsed or cleaning time remaining, on off status and other indicative operations or status options. In some embodiments of the present invention, a pool-cleaning robot may use a visual display to provide indicia of warning or alerts presenting one or more visual indications. For example the visual display may display information regarding possible warnings of which the robot operator should be aware, e.g., that the filter system needs to be cleaned, that the cleaning cycle is about to finish, that there is a problem in the propulsion mechanism and/or in the pump, etc. In some embodiments of the present invention, a pool-cleaning robot may use a visual display to display animation or graphic figures or scenarios of various kinds aimed to inform, entertain or amuse people who view the pool-cleaning robot when in operation or otherwise, for example by displaying images, moving images, animations or videos.

In accordance with some embodiments of the invention, a pool-cleaning robot may be configured to have mono- or multi-color visual display on which the robot can controllably display information. The visual display may include one or a plurality of display surfaces or screens, for example light strips. The display surfaces may be located on an external surface of the housing of the robot, e.g., substantially on or adjacent to a top surface or side surface of the robot, so as to increase visibility of displayed indications to a viewer or operator looking at the robot from inside or outside the pool. The robot may be configured to controllably alter display parameters of the display surfaces, such as but not limited to, light intensity, color, turning on and off, blinking, phasing between adjacent or nonadjacent portions of the display surfaces, synchronous or random alterations of lighting parameters, and other parameters.

In accordance with some embodiments of the invention, a pool-cleaning robot may be configured to have mono- or multi-color visual display, containing at least one display surface, in order to controllably display information on the visual display.

In accordance with some embodiments of the invention, a pool-cleaning robot may be configured to display information on the visual display, such as images to indicate status, warnings and other information. For example, if the robot is in start-up mode, an image of closed eyes or an animation of a sun rising from the sea may be displayed. The robot in starting mode may be configured to display an image of open eyes or an animation of a shining sun. During moving straight on the floor, the robot may be configured to display an image of open eyes or an animation of an arrow. During a substantial length of time before turning left, the robot may be configured to display an image of open eyes or an animation of a left pointing arrow. During a substantial length of time before turning right, the robot may be configured to display an image of open eyes or an animation of a right pointing arrow. During a left turn or when receiving a user command to turn left, the robot may be configured to display an image of eyes looking at the left side or an animation of a left pointing arrow. During a right turn or when receiving a user command to turn right, the robot may be configured to display an image of eyes looking at the right side or an animation of a right pointing arrow. During change direction command by the operator, the robot may be configured to display an image of open eyes or an animation of an arrow pointing both forward and backwards. During calibration, the robot may be configured to display an image or an animation indicating the time left in minutes for finishing calibration. During a tilt, the robot may be configured to display an image of eyes looking up or an image a U-style or angled arrow. During climbing up a wall, the robot may be configured to display an image of eyes looking up or an animation of stairs or ascending stairs. During descending a wall, the robot may be configured to display an image of eyes looking down or an animation of stairs or descending stairs. When the filter or dirt collection container is substantially full, the robot may be configured to display an image of open eyes or an image of a trash can. During stopping mode, the robot may be configured to display an image of closed eyes, an image of a moon crescent or an animation of stars or bubbles.

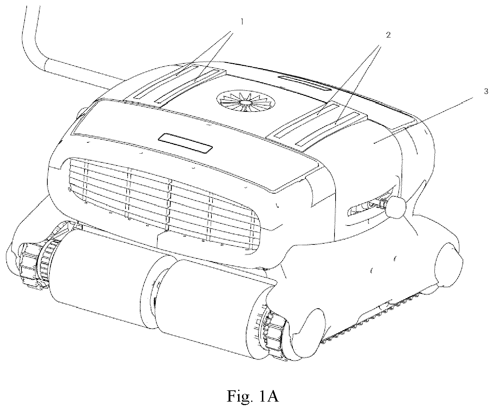

Fig. 1A schematically illustrates a pool-cleaning robot with a visual display, in accordance with some embodiments of the present invention. Pool-cleaning robot 3 may include a first set of light strips 1 (e.g., two substantially parallel strips) and a second set of light strips 2 (e.g., two substantially parallel strips), which are operated and controlled by a processor of robot 3, to provide one or a plurality of visual indications relating to robot 3 for example status, operational information and/or warnings. For example, sets of light strips may indicate direction of movement of robot 3, e.g., whether robot 3 is making a turn, climbing a wall or traveling straight.

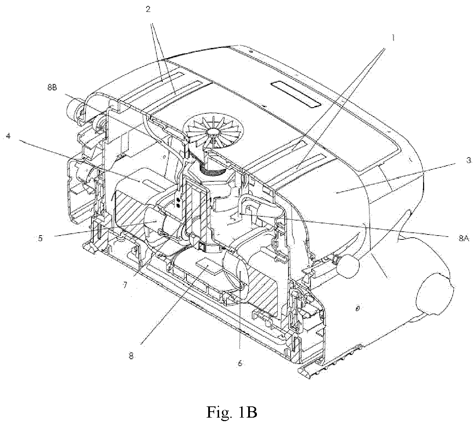

Fig. 1B is a cross-sectional view of the pool-cleaning robot of Fig. 1A. Robot 3 may include a propulsion mechanism 4 that includes a substantially water-tight motor box. Propulsion mechanism 4 may include a first horizontal motor 5, second horizontal motor 6 and vertical motor 7, which are operated and controlled by electronic control board 8. First horizontal motor 5 and second horizontal motor 6 may be used to propel robot 3 to travel across a surface of the pool. Vertical motor 7 powers a pump for pumping water, serving, for example to suck water into or out of robot 3 for filtration purposes, and/or for assisting in obtaining increased traction of robot 3 with the pool surface. Control board 8 may control the visual display (e.g., the first set of light strips 1 and the second set of light strips 2 via first set of cables 8a and second set of cables 8b, respectively.

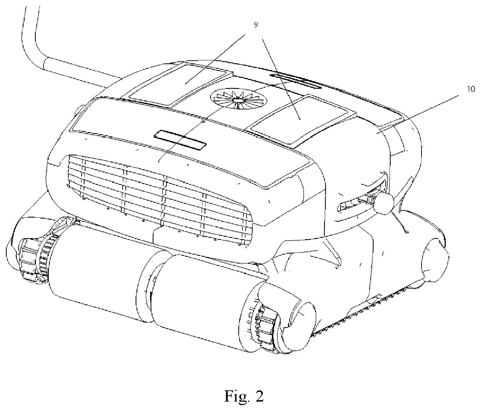

Fig. 2 schematically illustrates another pool-cleaning robot with a visual indicator, in accordance with some embodiments of the present invention. Robot 10 may include display surfaces 9 placed on a top or side surface of robot 10.

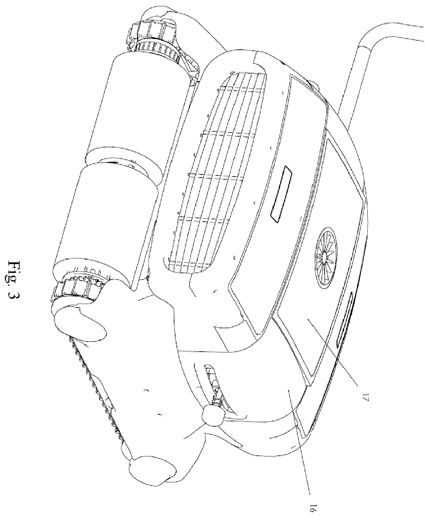

Fig. 3 schematically illustrates a pool-cleaning robot with visual indicators, having visual display, in accordance with some embodiments of the present invention. Robot 16 may be configured to have display unit 17 placed atop a portion of robot 10. Display unit 17 may be configured to have an opening to accommodate, for example, a water inlet or outlet port.

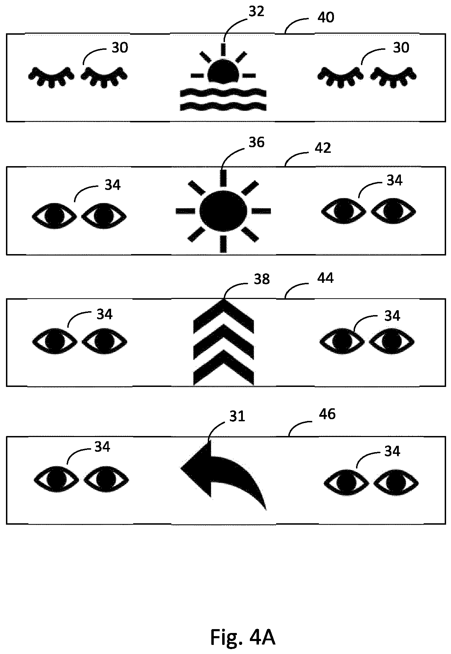

Fig. 4A illustrates several examples of indications for display on a visual display of a pool-cleaning robot, according to some embodiments of the present invention.

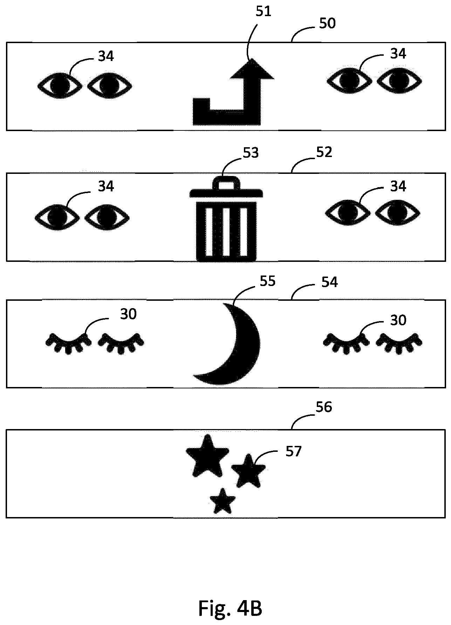

Fig. 4B illustrates additional examples of indications for display on a visual display of a pool-cleaning robot, according to some embodiments of the present invention.

For example, indication 40, which may be displayed on the visual display, is designed to indicate that the pool-cleaning robot is undergoing start up initiation. The start-up indication 40 may include one or two images of closed eyes 30 and an image or animation of a rising sun 32, which many may associate with waking up.

For example, indication 42, which may be displayed on the visual display, is designed to indicate that the pool-cleaning robot has completed the start-up initiation process. The start-up process completion indication 42 may include one or two images of open eyes 34 indicating that the robot is in active mode, and an image or animation of a sun 36, which many may associate with day-time and activity.

In another example, indication 44, which may be displayed on the visual display, is designed to indicate that the pool-cleaning robot is traveling forward (or backwards), as indicated by the direction of an image or animation of arrows 38, while the one or two images of open eyes 34 indicates that the robot is in active mode.

In another example, indication 46, which may be displayed on the visual display, is designed to indicate that the pool-cleaning robot is making a left (or right) turn, as indicated by the direction of an image or animation of arrow 31, while the one or two images of open eyes 34 indicates that the robot is in active mode.

In another example, indication 50, which may be displayed on the visual display, is designed to indicate that the pool-cleaning robot is reversing, as indicated by the image or animation of turned arrow 51, while the one or two images of open eyes 34 indicates that the robot is in active mode.

In another example, indication 52, which may be displayed on the visual display, is designed to indicate that the filter of the pool-cleaning robot is full and needs emptying, as indicated by the image or animation of garbage can 53, while the one or two images of open eyes 34 indicates that the robot is in active mode.

Indication 54, which may be displayed on the visual display, is designed to indicate that the pool-cleaning robot is stopping, "stopping" indication 54 may include one or two images of closed eyes 30 and an image or animation of a moon crescent 55, which many may associate with sleeping or stopping.

Indication 56, which may be displayed on the visual display, is designed to indicate that the pool-cleaning robot is shutting down, as indicated by the image or animation of starts 57.

Other indications may be designed to indicate various actions, statuses and operation parameters, as may be desired, using a visual display of a pool-cleaning robot, according to some embodiments of the invention.

Different embodiments are disclosed herein. Features of certain embodiments may be combined with features of other embodiments. Thus, certain embodiments may be combinations of features of multiple embodiments. The foregoing description of the embodiments of the invention has been presented for the purposes of illustration and description. It is not intended to be exhaustive or to limit the invention to the precise form disclosed. It should be appreciated by persons skilled in the art that many modifications, variations, substitutions, changes, and equivalents are possible in light of the above teaching. It is, therefore, to be understood that the appended claims are intended to cover all such modifications and changes as fall within the true spirit of the invention.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A pool-cleaning robot comprising:
a housing;
a propulsion mechanism configured to propel the robot along the internal surfaces of a pool; and
a visual display for displaying information associated with operation of the pool-cleaning robot.

2. The pool-cleaning robot of claim 1, wherein the visual display comprises one or a plurality of display surfaces.

3. The pool-cleaning robot of claim 1, wherein the visual display is placed on an external surface of the housing.

4. The pool-cleaning robot of claim 3, wherein the visual display is located on a top surface of the housing.

5. The pool-cleaning robot of claim 3, wherein the visual display is located on a side surface of the housing.

6. The pool-cleaning robot of claim 1, wherein the visual display comprises one or a plurality of display surfaces.

7. The pool-cleaning robot of claim 6, wherein said one or a plurality of display surfaces are selected from the group of display surfaces consisting of: electroluminescent (ELD) display, liquid crystal display (LCD), light-emitting diode (LED) back-lit LCD, thin-film transistor (TFT) LCD, LED display, organic light emitting diode (OLED) display, active-matrix organic light-emitting diode (AMOLED) display, plasma display, and quantum dot light-emitting diode (QLED) display.

8. The pool-cleaning robot of claim 1, wherein the robot comprises a controller for controlling the visual display.

9. The pool-cleaning robot of claim 1, wherein the robot is configured to be controlled by a remote-control unit for remotely controlling the pool-cleaning robot.

10. The pool-cleaning robot of claim 1, wherein the robot is configured to be controlled by an application of a smartphone for remotely controlling the pool-cleaning robot.

11. The pool-cleaning robot of claim 1, wherein the information associated with operation of the pool-cleaning robot is selected from the group of indications consisting of: status of the robot, operation mode of the robot, start-up indication, indication of travel direction of the robot, indication that a filter of the robot needs cleaning, warning indication and shutting down indication.

12. The pool-cleaning robot of claim 1, wherein the visual display comprises one or a plurality of sets of strips.

13. The pool-cleaning robot of claim 12, configured to display the information on some of said one or a plurality of the sets of strips.

14. The pool-cleaning robot of claim 1, wherein the information is selected from the group consisting of images, moving images, videos and animations.
